# EUROPEAN PATENT APPLICATION

(11) **EP 4 756 336 A1**
(43) Date of publication of application: **10.06.2026**
(21) Application number: 24852177.5
(22) Date of filing: 30.07.2024
(51) Int. Cl.: F25D 23/06, F16L 59/065, F16L 59/08

(54) **HEAT INSULATOR**

(30) Priority: 04.08.2023 KR 20230102477
(71) Applicant: LG Electronics Inc., Yeongdeungpo-gu Seoul 07336 (KR)
(72) Inventor: JUNG, Wonyeong, Seoul 08592 (KR); YOUN, Deokhyun, Seoul 08592 (KR); KO, Wanseok, Seoul 08592 (KR)
(74) Representative: Ter Meer Steinmeister & Partner
(86) International application number: PCT/KR2024/011171
(87) International publication number: WO 2025/033823

(57) **Abstract**

A heat insulator is disclosed. The heat insulator includes a plurality of support plates stacked at predetermined intervals in a Vacuum space between a first plate and a second plate. The plurality of support plates may include a plurality of connection portions disposed in parallel to each other between the first plate and the second plate, and a plurality of support portions extending from the plurality of connection portions toward the first plate and the second plate, respectively, to support the plurality of connection portions to be spaced apart from each other. Accordingly, the manufacturing process may be simplified by reducing the number of assembly components, and the assembly reliability of a thermal resistance sheet may be increased.

## Description

### [Technical Field]

The present disclosure relates to a heat insulator. The present disclosure relates to a refrigerator.

### [Background Art]

In refrigerators and other appliances, a heat insulator is used in the walls that form the case. As the heat insulator, a vacuum heat insulator is known. The vacuum heat insulator defines a sealed vacuum space between the first and second plates **to maintain a constant internal environment,** thereby **minimizing the impact of external temperatures** on the internal temperature.

There is Korean Patent No. 10-0343719 (Patent Document 1) of the present applicants. According to the registered Patent, a vacuum adiabatic panel is manufactured, the vacuum adiabatic panel is embedded in the wall of a refrigerator, and the outer side of the vacuum adiabatic panel is finished with a separate molded article made of Styrofoam. This method eliminates the need for foaming and improves insulation performance. However, this method has the drawback of increasing costs and complicating the manufacturing process.

As another example, there have been attempts to fabricate the entire refrigerator wall as a single vacuum heat insulator. For example, U.S. Patent Publication No. US2040226956A1 (Patent Document 2) discloses a method for an insulating structure for a refrigerator in a vacuum state. However, it is difficult to provide a sufficient vacuum in the walls of a refrigerator to achieve a practical level of insulation. Specifically, there are several problems, including the difficulty in preventing heat transfer at the contact portion between the outer and inner cases, which have different temperatures, the difficulty in maintaining a stable vacuum state, and the difficulty in preventing deformation of the case due to vacuum pressure.

Japanese Patent Application Laid-Open No. 2011-247534 (Patent Document 3) discloses an insulation box that simplifies the bonding work and improves productivity when installing and preparing multiple vacuum adiabatic panels.

However, the conventional heat insulator as described above has a complex assembly process due to an increase in the number of components that make up the heat insulator, which may lower productivity and increase manufacturing costs. Considering this, when the support structure that supports the portion between the two plates is simplified, the two plates forming the wall surface may be deformed due to vacuum pressure, reducing reliability.

### [Prior Art Documents]

### [Patent Documents]

Korean Patent No. 10-0343719

US Patent Publication No. US20040226956A1

Japanese Patent Publication No. 2011-247534A

### [Disclosure]

### [Technical Problem]

The present disclosure provides a heat insulator that can simplify the manufacturing process by reducing the number of assembly components.

Optionally, the present disclosure provides a heat insulator capable of increasing assembly reliability while simultaneously reducing noise caused by collisions between members.

Optionally, the present disclosure provides a heat insulator capable of minimizing deformation due to vacuum pressure.

Optionally, the present disclosure provides a heat insulator capable of increasing the assembly reliability of a thermal resistance sheet.

Optionally, the present disclosure provides a heat insulator capable of enhancing the insulation effect by increasing the cross-sectional area of the thermal resistance sheet.

### [Technical Solution]

The heat insulator of the present disclosure may include a first plate, a second plate, and a Vacuum space. The Vacuum space may be provided between the first plate and the second plate.

The Vacuum space may include a support plate that is spaced apart by a predetermined distance between the first plate and the second plate. The support plate may include a connection portion and a support portion.

The connection portions may be disposed in parallel to each other between the first plate and the second plate. The support portion may extend from the connection portion toward the first plate and the second plate to support the connection portion so as to be spaced apart from each other.

A first support portion extending from one connection portion of the plurality of connection portions may be In contact with the first plate. A second support portion extending from another connection portion of the plurality of connection portions may be In contact with the second plate. The first support portion and the second support portion may be coupled to each other.

The first support portion may be formed in a groove shape having a preset depth. The second support portion may be formed in a protrusion shape having a preset length to be inserted into the first support portion.

A connecting groove may be formed inside the first support portion so that the second support portion can be inserted. An insulating groove may be formed on one surface of the connecting groove so as to be spaced apart from the end surface of the first support portion. A cross-sectional area of the insulating groove may be formed smaller than a cross-sectional area of the connecting groove.

The plurality of connection portions may each be formed in a lattice shape having lattice points on a plane. The plurality of support portions may respectively extend from the lattice points of the plurality of connection portions.

A reinforcing portion may be formed in at least one connection portion of the plurality of connection portions. The reinforcing portion may be formed by radially connecting the lattice points.

A reinforcing portion may be formed in at least one connecting portion of the plurality of connection portions. The reinforcing portion may be formed to intersect between the lattice points.

A support groove may be formed in at least one of the first plate and the second plate so that a support portion extending from at least one of the connection portions is inserted.

The above support groove may be formed in an annular shape or an arc shape so that the support portions are inserted individually.

A support step may be formed in at least one of the first plate and the second plate so that a support portion extending from at least one of the connection portions is supported in a direction toward an corner of the connection portion.

The support step may be formed linearly so that a plurality of the support portions are supported.

The plurality of support plates may be disposed spaced apart from each other on the same plane. The support step may be formed by crossing between the plurality of support plates spaced apart from each other on the same plane.

At least one thermal resistance sheet may be provided between the first plate and the second plate. The thermal resistance sheet may be formed by insert injection into at least one of the plurality of support plates.

A coupling groove is formed in the plurality of support portions so that the thermal resistance sheet is inserted and supported.

The thermal resistance sheet may be formed on the same side surface of both side surfaces of each of the plurality of connection portions.

The plurality of support portions may be formed with the same length on both side surfaces of each of the plurality of connection portions.

The thermal resistance sheet may be formed on different side surfaces of both side surfaces of each of the plurality of connection portions.

The plurality of support portions may be formed with different lengths on both side surfaces of each of the plurality of connection portions.

### [Advantageous Effects]

According to the heat insulator of the present disclosure, it is possible to simplify the manufacturing process by reducing the number of assembly components by injection-molding the thermal resistance sheet.

According to the heat insulator of the present disclosure, it is possible to increase assembly reliability by coupling the plurality of support plates in a tongue-and-groove configuration and reduce noise by suppressing collisions between members.

According to the heat insulator of the present invention, it is possible to minimize deformation due to vacuum pressure by supporting both plates using a plurality of single-piece support portions.

According to the heat insulator of the present disclosure, it is possible to increase the assembly reliability of the thermal resistance sheet by pressing and coupling the thermal resistance sheet to a plurality of support portions.

According to the heat insulator of the present disclosure, it is possible to improve the insulation effect by increasing the cross-sectional area of the thermal resistance sheet by arranging the thermal resistance sheet in multiple layers.

### [Description of Drawings]

FIG. 1 is a perspective view illustrating the exterior of a refrigerator according to one embodiment of the present disclosure.
FIG. 2 is a conceptual diagram illustrating a vacuum heat insulator provided in the refrigerator of FIG. 1.
FIG. 3 is a conceptual diagram illustrating a third plate provided on a plate of FIG. 2.
FIG. 4 is a conceptual diagram illustrating a thermal insulator provided on the plate of FIG. 3.
FIG. 5 is an exploded perspective view of a heat insulator according to the present disclosure.
FIG. 6 is a perspective view illustrating a portion the heat insulator of FIG. 5 when the heat insulator is assembled.
FIG. 7 is a plan view of FIG. 6.
FIG. 8 is an enlarged plan view of a portion of FIG. 7.
FIG. 9 is a cross-sectional view taken along line IX-IX of FIG. 8.
FIG. 10 is a plan view illustrating another embodiment of the heat insulator according to the present disclosure.
FIG. 11 is an exploded perspective view illustrating still another embodiment of the heat insulator according to the present disclosure.
FIG. 12 is an assembled cross-sectional view of FIG. 11.
FIG. 13 is a perspective view illustrating still another embodiment of the heat insulator according to the present disclosure.
FIG. 14 is a plan view of FIG. 13.
FIG. 15 is a cross-sectional view taken along line X-X of FIG. 14.

### [Mode for Invention]

Hereinafter, a common description describing the parts commonly defined in all embodiments of the present disclosure will be described.

In one embodiment, the heat insulator may be **integrally formed** as a single unit. For example, the heat insulator may provide a first wall extending in one direction and a second wall extending in a direction different from the one direction. Optionally, the heat insulator of the present disclosure may include a first heat insulator and a second heat insulator. The second heat insulator may be provided as a separate component separated from the first heat insulator. The second heat insulator may be connected to the first heat insulator by a connector. In the present disclosure, the connector may be defined as a joint. The second heat insulator may include a portion extending in the same direction as the first heat insulator. The second heat insulator may include a portion extending in a different direction from the first heat insulator. The second heat insulator may include a portion connected to the first heat insulator, or may include a portion disposed to overlap the first heat insulator in at least one direction. The heat insulator may be a vacuum heat insulator including a Vacuum space or a non-vacuum heat insulator not including a Vacuum space. The heat insulator may be a combination of the vacuum heat insulator and the non-vacuum heat insulator. The Vacuum space provided in the second heat insulator may include a portion extending in the same direction as the Vacuum space provided in the first heat insulator. The vacuum space provided in the second heat insulator may include a portion extending in a different direction from the Vacuum space provided in the first heat insulator. The vacuum space provided in the second heat insulator may include a portion disposed to overlap the vacuum space provided in the first heat insulator in at least one direction. The heat insulator may be provided in the form of a panel. In the present disclosure, a "panel" is described below as an example, but a disclosure in which the "panel" is replaced with the "heat insulator" may also be included in the present disclosure. For example, in the present disclosure, when it is described below that at least two panels of the main body form the exterior of the refrigerator, it may be understood or interpreted that at least two heat insulators of the main body form the exterior of the refrigerator.

Optionally, the refrigerator of the present disclosure may include a main body. The main body may include at least one storage chamber. The main body may include a partition wall dividing a first storage chamber and a second storage chamber. The first storage chamber joint may include a first storage chamber joint, a second first storage chamber joint, and/or a third first storage chamber joint. The second storage chamber joint may be provided on one side of the second storage chamber. The second storage chamber joint may include a first joint, a second joint, and/or a third joint.

The partition wall may include the vacuum heat insulator and/or the non-vacuum heat insulator. The refrigerator of the present disclosure may include a door. The refrigerator of the present disclosure may include a machine room disposed on one side of the main body. At least one of a compressor, a heat-radiating component (for example, a condenser, a heat-radiating portion of a thermoelectric module, a heat sink for heat exchange with the heat-radiating portion of a thermoelectric module, or the like), and a cooling fan may be disposed in the machine room. The refrigerator may include at least one of a first cover (for example, a side cover) forming at least a portion of a first surface (for example, a side surface), a second cover (for example, a back cover) forming at least a portion of a second surface (for example, a rear surface), a third cover (for example, an upper cover) forming at least a portion of a third surface (for example, an upper surface), a fourth cover (for example, a bottom cover) forming at least a portion of a fourth surface (for example, a bottom surface), and a fifth cover (for example, a front cover) forming at least a portion of a fifth surface (for example, a front surface) for the machine room. One or more of the first, second, third, fourth, and fifth covers may be provided as a single component or in a plurality of components. The machine room may include the heat insulator in the refrigerator of the present disclosure.

The panel may include at least one of a first plate, a second plate, and a side plate. A Vacuum space may be provided between the first plate and the second plate. The refrigerator of the present disclosure may include at least one panel. The present disclosure may include at least one of a first panel forming at least a portion of a first surface (for example, a side surface) of the refrigerator, a second panel forming at least a portion of a second surface (for example, a rear surface) of the refrigerator, a third panel forming at least a portion of a third surface (for example, an upper surface) of the refrigerator, a fourth panel forming at least a portion of a fourth surface (for example, a bottom surface) of the refrigerator, and a fifth panel forming at least a portion of a fifth surface (for example, a front surface) of the refrigerator. At least one of the first, second, third, fourth, and fifth surfaces of the refrigerator may provide at least a portion of a wall forming the main body or may provide at least a portion of a wall forming the door. At least one of the first, second, third, fourth, and fifth panels may be provided as a single component or may be provided in a plurality of components. The joint may be provided to connect the corner of the refrigerator or to connect a first wall and a second wall forming a wall of the refrigerator to each other. The joint may be provided to connect the panel to another component (for example, another panel). The joint may be provided to connect at least two of the first, second, third, fourth, and fifth panels. At least one of the first, second, third, fourth, and fifth panels may be provided as a plurality of panels, and the joint may be provided to connect the plurality of panels to each other. The joint may include a first surface, a second surface, and/or a third surface. The first surface of the joint may cover at least a portion of at least one of the first, second, third, fourth, and fifth panels. The second surface of the joint may cover at least a portion of at least another one of the first, second, third, fourth, and fifth panels. The third surface of the joint may be connected to the first surface of the joint and/or the second surface of the joint. The third surface of the joint may be connected to a corner of the first surface of the joint and/or a corner of the second surface of the joint. The third surface of the joint may be formed to be inclined to at least one of the first surface of the joint and the second surface of the joint. At least some of the first, second, third, fourth, and fifth panels may be provided as panels having a first insulation performance per unit thickness, and at least other some of the first, second, third, fourth, and fifth panels may be provided as panels having a second insulation performance per unit thickness. The first insulation performance and the second insulation performance may be different.

The heat insulator or refrigerator of the present disclosure may include a duct. The duct may include a first duct, a second duct, and/or a third duct. The first duct may supply cold air to the first storage chamber or the second storage chamber. The second duct may accommodate an evaporator. The third duct may be connected to the first duct and the second duct in communication with each other. The third duct may include a first surface, a second surface, a third surface, a fourth surface, and/or a fifth surface. The first surface of the third duct may surround the first surface of the joint. The second surface of the third duct may surround the second surface of the joint. The third surface of the third duct may surround the third surface of the joint. The third duct may include a fourth surface. The fourth surface of the third duct may extend from the first surface of the third duct or may be disposed toward the second storage chamber. The fifth surface of the third duct may extend from the second surface of the third duct or may be disposed toward the evaporator.

The heat insulator or refrigerator of the present disclosure may include a block. The block may include a portion extending in the same direction as one or more of the first, second, third, fourth, and fifth panels. The block may include a portion extending in a different direction from one or more of the first, second, third, fourth, and fifth panels. The block may include a first surface (for example, a left surface), a second surface (for example, a right surface), a third surface (for example, a rear surface), a fourth surface (for example, a lower surface), a fifth surface (for example, an upper surface), and a sixth surface (for example, a front surface). Some of the first, second, third, fourth, and fifth surface of the refrigerator may be provided in the form of panels, and other parts of the first, second, third, fourth, and fifth surfaces of the refrigerator may be provided in the form of blocks. The block may be provided as the non-vacuum heat insulator. For example, the block may be a block cover and/or a PU foam filling inside the block cover. The block may include at least one of a first block portion (for example, a side block portion), a second block portion (for example, a rear block portion or a front block portion), and a third block portion (for example, a bottom block portion or an upper block portion). Each of the first, second, and third block portions may be provided in a plurality of block portions. At least two of the first, second, and third block portions may be connected to provide the joint. The third block portion may form one surface of the first storage chamber and/or one surface of the machine room. The third block portion may be provided as a partition wall, or may form one surface of the first storage chamber.

The heat insulator or refrigerator of the present disclosure may include an insulating reinforcement portion. The insulating reinforcement portion may include a portion connected to one side of the block, or a portion formed to protrude from the block.

The heat insulator or refrigerator of the present disclosure may include a hinge. The hinge may be disposed on one side of the heat insulator. The hinge may be disposed on the main body and/or door of the refrigerator.

The hinge may include at least one of a hinge fixing portion which is a portion that the hinge is coupled to at least one of the heat insulator, the main body of the refrigerator, and the door of the refrigerator, a hinge shaft, and a hinge connecting portion which is a portion extending to protrude from the hinge fixing portion. The hinge may include at least one of a first hinge (for example, an upper hinge) disposed on one side of a wall forming the first storage chamber, a second hinge (for example, a middle hinge) disposed on the partition wall, and a third hinge (for example, a lower hinge) of the wall forming the second storage chamber. The heat insulator or the refrigerator of the present disclosure may include at least one of a hinge reinforcing frame that reinforces the strength of the hinge, a cover to which the hinge is coupled, and a hinge reinforcing plate that is disposed or accommodated so as to be connected to the panel. The hinge reinforcing frame may include at least one of a first, a second, a third, and a fourth frame portion. At least two of the first, second, third, and fourth frame portions may extend in different directions.

The heat insulator or refrigerator of the present disclosure may include a support frame. The support frame may support one surface of the panel. The support frame may include a coupling portion. The block may be supported by the support frame in the machine room. The support frame may include a first support frame and/or a second support frame.

The heat insulator or refrigerator of the present disclosure may include an inner cover. The inner cover may be disposed between the cover of the machine room and the hinge reinforcement frame (for example, the first frame portion).

The heat insulator or refrigerator of the present disclosure may include a decoration. The decoration may be disposed on the surface of the heat insulator. The decoration may be disposed on the surface of the main body and/or door of the refrigerator. For example, the decoration may be disposed on the outer surface of the heat insulator or the outer surface of the refrigerator.

The heat insulator or refrigerator of the present disclosure may include a hot line. The hot line may be disposed on the surface of the heat insulator. The decoration may be disposed on the surface of the main body and/or door of the refrigerator. The hot line may be disposed between the decoration and the surface of the heat insulator. The hot line may be disposed between the decoration and the surface of the refrigerator and/or between the decoration and the surface of the door.

The heat insulator or refrigerator of the present disclosure may include a casing. The casing may be an outer casing or an inner casing. The outer casing may be connected to the second plate. The outer casing may be provided to cover at least a portion of the second plate. The outer casing may be provided in contact with the second plate or spaced apart from the second plate by a predetermined distance. The inner casing may be connected to the first plate . The inner casing may be provided to cover at least a portion of the first plate. The inner casing may be provided in contact with the first plate or spaced apart from the first plate by a predetermined distance.

The heat insulator or refrigerator of the present disclosure may include a drawer and/or a drawer guide. The drawer guide may include a first storage chamber drawer guide provided in a first storage chamber. The first storage chamber drawer guide may include at least one of a first plate (for example, a side plate), a second plate (for example, a bottom plate), a third plate (for example, a top plate), and a fourth plate (for example, a middle plate).

The drawer guide may be provided with a second storage chamber drawer guide provided in the second storage chamber.

The heat insulator or refrigerator of the present disclosure may include a shelf and/or a shelf support frame.

[Details Description of the Disclosure] is divided into the aforementioned [common description] and the [description based on drawings] described below. In the [Details Description of the Disclosure], each of the specific details described for carrying out the disclosure may be understood as an embodiment of the present disclosure. In the [Details Description of the Disclosure], a content that combines at least two or more of the specific details described for carrying out the disclosure may also be understood as an embodiment of the present disclosure. For example, each paragraph and each combination of paragraphs in the [common description] section or the section described based on the drawings in the [Details Description of the Disclosure] may be understood as an embodiment of the present disclosure. As another example, each sentence and each combination of sentences in the [Common description] section or the section described based on the drawings in the [Details Description of the Disclosure] may be understood as an embodiment of the present disclosure.

Hereinafter, based on each drawing, the [description based on drawing] section describing the present disclosure will be described. The following section provides a detailed description of the disclosure with reference to the accompanying drawings.

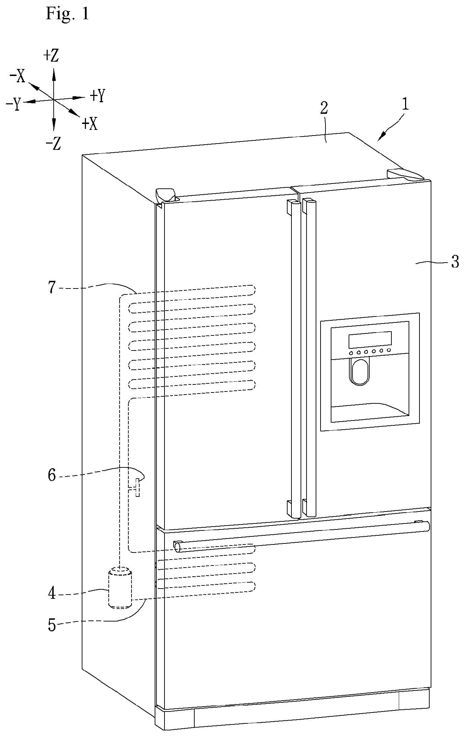

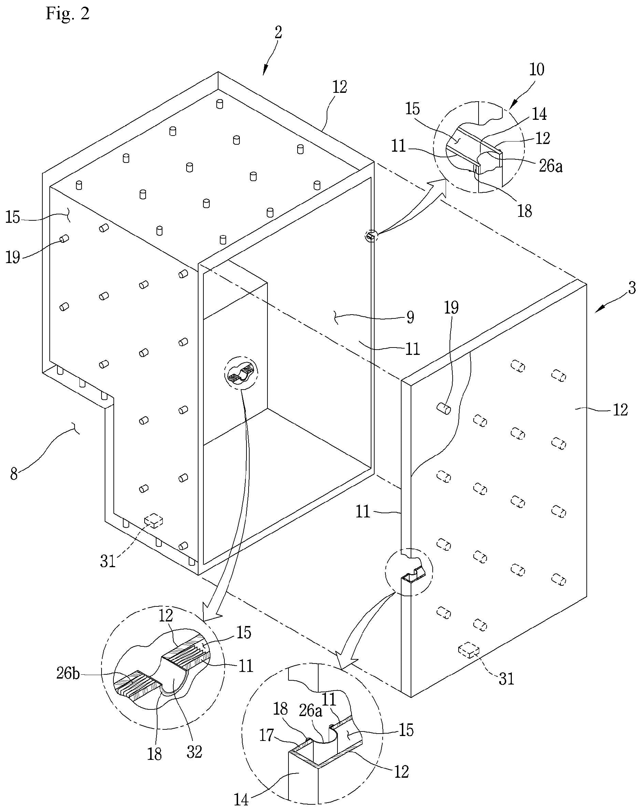

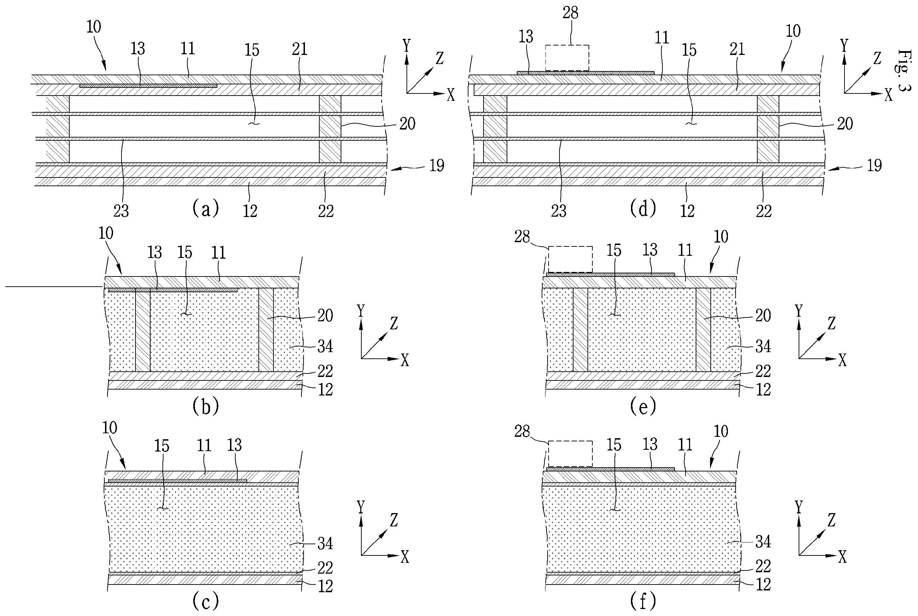

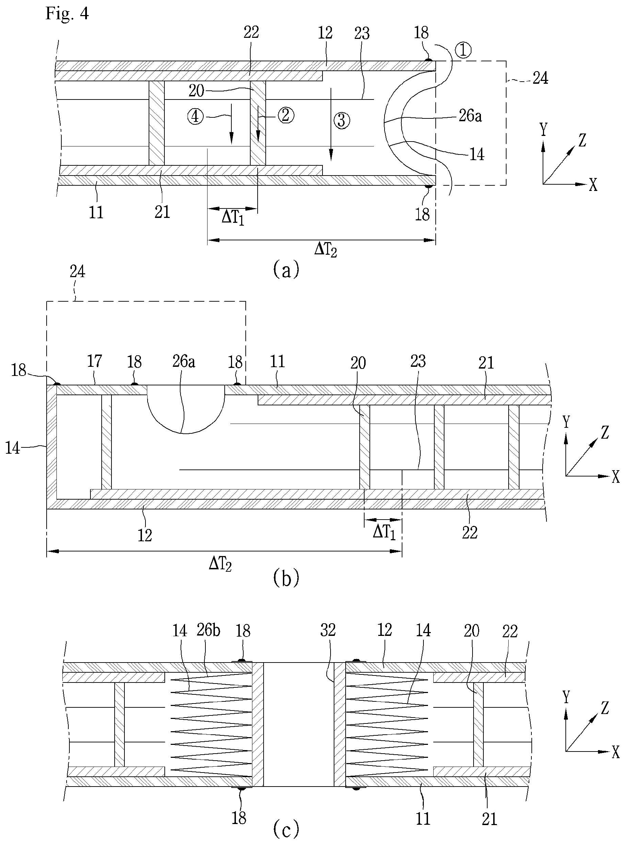

Referring to FIGS. 1 to 4, a heat insulator 10 of the present disclosure may include plates 11, 12, and 14. In the present disclosure, the term "plate" may mean at least one of the first and second plates 11 and 12 and the side plate 14. Optionally, the heat insulator of the present disclosure may include a Vacuum space 15. The Vacuum space 15 may be formed by walls provided by the plates 11, 12, and 14. The Vacuum space 15 may have a thickness in a first direction. The plates 11, 12, and 14 may include a first plate 11 and a second plate 12. The first plate 11 may include a portion extending in a direction different from the first direction. The second plate 12 may include a portion extending in a first direction different from the first direction. Optionally, the plate may include a side plate 14 including a portion extending in the first direction. For example, the heat insulator 10 of the present disclosure may be provided such that the first and second plates 11 and 12 and the side plate 14 are each provided as separate components, and the separated components are connected to each other. As another example, the heat insulator 10 of the present disclosure may be provided such that at least two components among the first and second plates 11 and 12 and the side plate 14 are provided as an integral part, and the separated components are connected to each other. As yet another example, the heat insulator 10 of the present disclosure may be provided such that the portions connecting the first and second plates 11 and 12 and the side plate 14 to each other are each provided as an integral part. In this case, the first plate 11 may be provided as a separate component, and the separated components may be provided to be connected to each other. Alternatively, the second plates 12 may be provided as separate components, and the separated components may be provided to be connected to each other. Alternatively, the side plates 14 may be provided as separate components, and the separated components may be provided to be connected to each other. Optionally, the heat insulator 10 of the present disclosure may include a third plate that is disposed on at least a portion of the heat insulator 10 or connected to at least a portion of the plates 11, 12, and 14. The third plate may include a portion that is thinner or has the same thickness as the plates 11, 12, and 14. The third plate may include a portion that is thicker than the plates 11, 12, and 14. The third plate may be disposed in the Vacuum space 15 or may be disposed outside the Vacuum space 15. Examples of the third plate may include the thermal insulators 23, 26a, 26b, and 34 and the deformation resistor 13 described in the present disclosure.

Optionally, the heat insulator 10 of the present disclosure may include thermal insulators 23, 26a, 26b, and 34 for reducing the amount of heat transfer between a first space provided near the first plate 11 and a second space provided near the second plate 12, or for reducing the amount of heat transfer between the first plate 11 and the second plate 12. A thermal insulator that reduces the amount of heat transfer by conduction may be defined as a conduction resistance sheets 26a and 26b, and a thermal insulator that reduces the amount of heat transfer by radiation may be defined as a radiation resistance sheet 23. The thermal insulators 23, 26a, 26b, and 34 may be provided as a porous material 34 or as a filler 34. The filler whose interior is filled with a porous material can be defined as the porous material 34. The thermal insulators 23, 26a, 26b, and 34 may include at least one of the radiation resistance sheet 23, the porous material 34, the filler 34, and the conduction resistance sheets 26a and 26b, or a mixture of at least two of them. The thermal insulators 23, 26a, 26b, and 34 may be connected to at least a portion of the plates 11, 12, and 14 or may be provided so as not to come into contact with the plates 11, 12, and 14. A shield 24 may be provided on the outside of the thermal insulators 23, 26a, 26b, and 34 to provide insulation. A connecting frame 17 may be provided on the outside of the thermal insulators 23, 26a, 26b, and 34. The heat insulator 10 may include a conduit passing through the Vacuum space 15. The conduit may be formed by providing a pipe wall 32 as a separate component, or may be provided in a form in which the pipe wall 32 is deleted and only a through hole is formed in the plate. The side plate 14 may be provided near the conduit, or the thermal insulators 23, 26a, 26b, and 34 may be provided.

Optionally, the heat insulator 10 of the present disclosure may include a deformation resistor 13 connected to at least some of the plates 11, 12, and 14 to increase the degree to deformation resistance of the plates 11, 12, and 14. When the deformation resistor is provided in the form of a plate, the deformation resistor may be referred to as a deformation resistance plate.

Optionally, the heat insulator 10 of the present disclosure may include a support 19 connected to at least some of the plates 11, 12, and 13 and maintaining the Vacuum space 15. The support 19 may include a bar 20 having a portion extending in a first direction, which is a thickness direction of the Vacuum space 15. The support 19 may include a support plate 22 having a portion extending in a direction different from the first direction. The support 19 may include a plurality of bars 20 and a connecting plate 21 connecting the plurality of bars 20. The support 19 may include at least one of the bar 20, the connecting plate 21, and the support plate 22, or a mixture of at least two of them.

Optionally, the heat insulator 10 of the present disclosure may include a component coupling portion that provides a portion where the components 24, 28, and 32 are disposed or supported. For example, when the component coupling portion is provided in the form of a plate, the component coupling portion may be referred to as a component coupling portion plate. The component connected to the component coupling portion may include a through component that is disposed to pass through at least a portion of the heat insulator 10 or at least some of the plates 11, 12, and 14. The component connected to the component coupling portion may include a surface component that is disposed to be connected to the surface of the heat insulator 10 or to be connected to the surfaces of the plates 11, 12, and 14. The through component may be a component that forms a path through which a fluid (electricity, refrigerant, water, air, or the like) passes. The through component may be provided in the form of a tube. The tube may include a straight tube and/or a curved tube. The tube may be provided in a plurality of tubes or may extend in one direction. The through component may include at least one of the tube, the first outlet portion, and the second outlet portion. In the present disclosure, the term 'fluid' is broadly defined to include moving solids, liquids, gases, and even electrical flow. The fluid includes moving solids, liquids, gases, and electricity. The through component may be a component that forms a path through which a refrigerant for heat exchange passes, such as a Suction Line Heat Exchanger (SLHX) or a refrigerant pipe. The SLHX may be understood as a suction line heat exchanger that causes heat exchange between the refrigerant that has passed through the evaporator and the refrigerant before being introduced into the evaporator. The through component may be a wire that supplies electricity to the apparatus. The through component may be a component that forms a path through which air can pass, such as a duct or port through which a fluid flows along the surface of the through component. The port may include an exhaust port that provides a path through which air is exhausted from a space formed between the first plate 11 and the second plate 12 to form the Vacuum space 15. The through component may be paths through which fluids such as coolant, hot water, ice, and defrost water may pass. Examples of the surface component may include a peripheral insulating material, a side panel, an injected foam, a pre-prepared resin, a hinge, a latch, a basket, a drawer, a shelve, lighting, a sensor, an evaporator 7, a front decoration, a hot line, a heater, an exterior cover, and an interior cover.

Through FIGS. 1 to 4, terms such as the plate, the first plate, the second plate, the side plate, the third plate, the Vacuum space, the thermal insulator, the conduction resistance sheet, the radiation resistance sheet, the porous material, the filler, the component coupling portion, the joint, the support, the bar, the support plate, the connecting plate, the deformation resistor, the deformation resistance plate, the component coupling portion, the component coupling portion plate, the through component, the surface component, the duct, the port, or the like are defined. In the present disclosure, when the above terms are used in parts other than the parts described with respect to FIGS. 1 to 4, the terms used should be interpreted as defined in FIGS. 1 to 4.

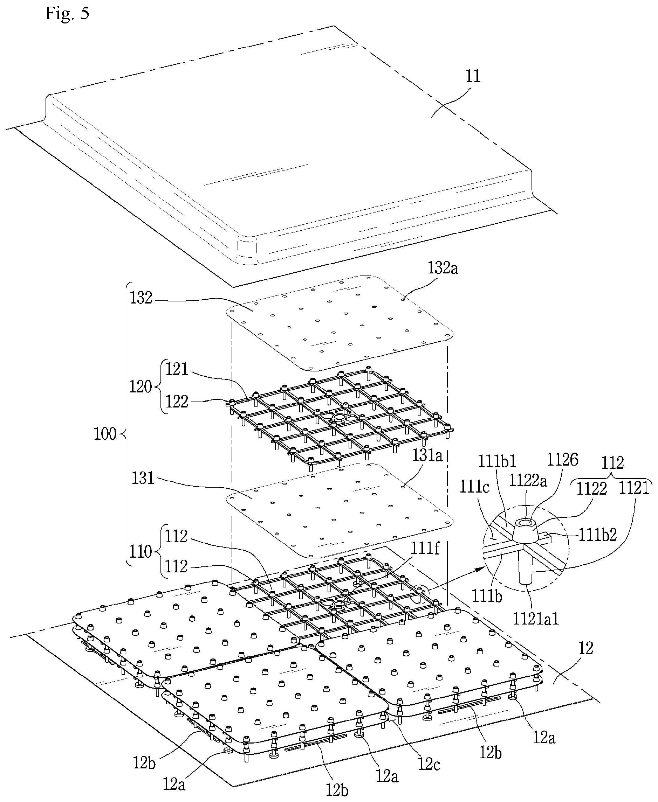

In the present disclosure, that object A is connected to object B may be defined to mean that at least a portion of the object A and at least a portion of the object B are directly connected, or that at least a portion of the object A and at least a portion of the object B are connected via an intermedium between the objects A and B. In a modification example, the object A being connected to the object B may include a case in which the object A and the object B are prepared as a single body in a shape in which they are connected in the above-described manner. In the present disclosure, examples of connection can be support, combine, and seal, which will be described later. In the present disclosure, the phrase "object A is supported by the object B" may be defined to mean that the object A is restricted from moving in one or more of +X, -X, +Y, -Y, +Z, and -Z axis directions by the object B. In the present disclosure, examples of support may be coupling and sealing, which will be described later. In the present disclosure, the phrase "object A is combined with the object B" may be defined to mean that the object A is restricted from moving in one or more of the X, Y, and Z-axis directions by the object B. In the present disclosure, an embodiment of the combination may be a sealing, which will be described later. In the present disclosure, the phrase "object A is sealed with the object B" may be defined to mean that movement of fluid is not permitted at a portion where the object A and object B are connected. In the present disclosure, at least one object, that is, at least a portion of the object A and the object B, may be defined as including a portion of the object A, the entirety of the object A, a portion of the object B, the entirety of the object B, a portion of the object A and a portion of the object B, a portion of the object A and the entirety of the object B, the entirety of the object A and a portion of the object B, and the entirety of the object A and the entirety of the object B. In the present disclosure, the phrase "plate A may be a wall defining space A" may be defined to mean that at least a portion of the plate A may be a wall forming at least a portion of the space A. That is, at least a portion of the plate A may be the wall forming the space A, or the plate A may be the wall forming at least a portion of the space A. In the present disclosure, the central portion of an object may be defined as a portion positioned at the center among three portions obtained by dividing the object into three equal parts along a longitudinal direction of the object. The periphery of an object may be defined as a portion positioned on one side or the other of a central portion among three portions obtained by dividing the object into three equal parts. The periphery of an object may include a surface in contact with the central portion and a surface opposite thereto. The opposite surface may be defined as the border or corner of the object. In the present disclosure, a degree to deformation resistance indicates the degree to which an object resists deformation, and may be defined as a value determined by the shape including the thickness of the object, the material of the object, and the processing method of the object. In the present disclosure, a degree of heat transfer resistance indicates the degree to which an object resists heat transfer, and may be defined as a value determined by the shape including the thickness of the object, the material of the object, and the processing method of the object. In the present disclosure, a degree of heat transfer resistance may be defined as at least one of a degree of conduction resistance, a degree of radiation resistance, and the degree of convection resistance or a sum of at least two or more thereof. The terms "upper side", "lower side", "right side", "left side", "front side", and "rear side" used in the following description will be understood through the coordinate system illustrated in FIGS. 1 and 5. An example of the "+Z" means the "upper side", an example of the "-Z" means the "lower side", an example of the "+Y" means the "right side", an example of the "-Y" means the "left side", an example of the "+X" means the "front side", and an example of the "-X" means the "rear side". A front-rear direction used in the present specification may be an example of the X-axis direction, a left-right direction may be an example of the Y-axis direction, and an up-down direction may be an example of the Z-axis direction.

The heat insulator 10 of the present disclosure may be applied to a refrigerator 1. The refrigerator 1 may include a main body 2 provided with a cavity 9 capable of storing stored items, and a door 3 provided to open and close the main body 2. A cold source for supplying cold air (cold) to the cavity 9 may be provided. For example, the cold source may be an evaporator 7 that evaporates a refrigerant to remove heat. The refrigerator may include a compressor 4 that compresses the refrigerant. The refrigerator may include a condenser 5 that condenses the compressed refrigerant. The condenser 5 may be connected to an expander 6 that expands the condensed refrigerant.

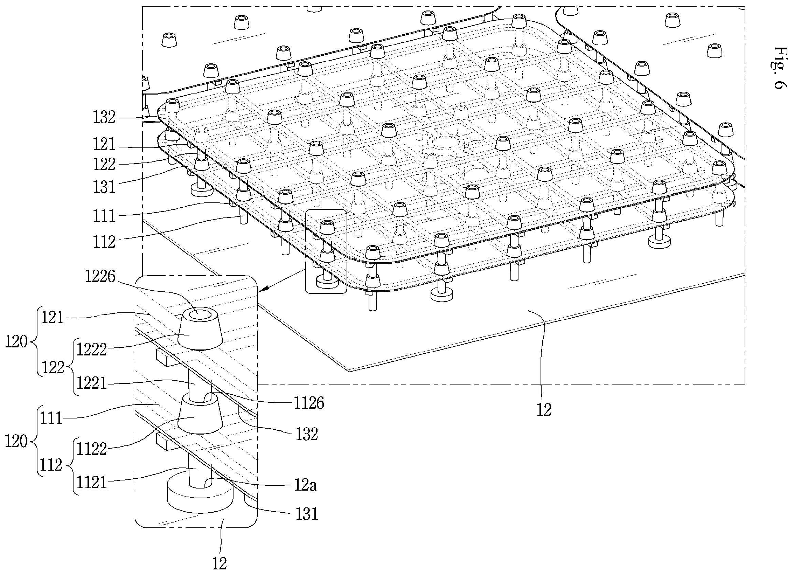

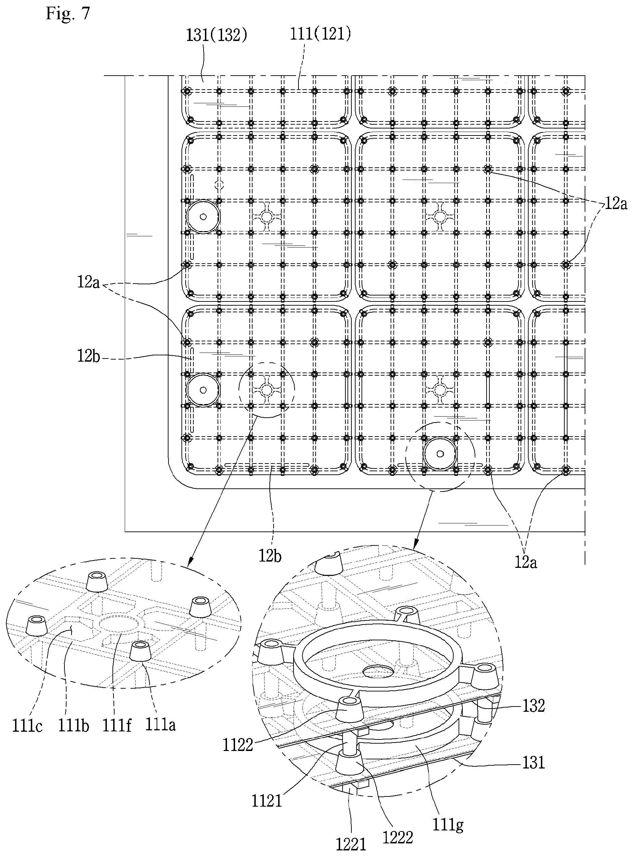

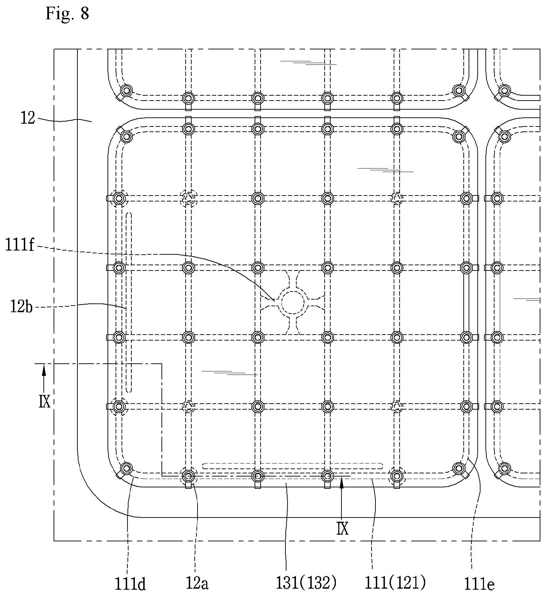

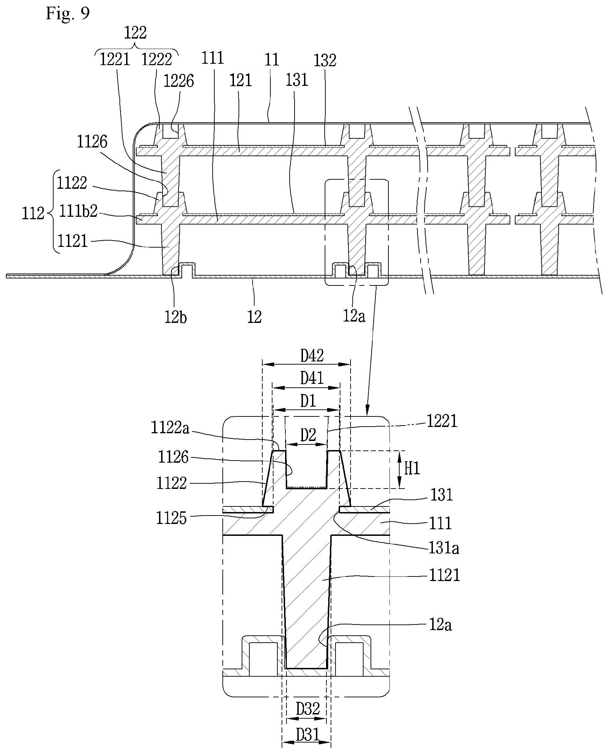

FIG. 5 is an exploded perspective view of the heat insulator according to the present disclosure, FIG. 6 is a perspective view illustrating a portion the heat insulator of FIG. 5 when the heat insulator is assembled, FIG. 7 is a plan view of FIG. 6, FIG. 8 is an enlarged plan view of a portion of FIG. 7, and FIG. 9 is a cross-sectional view taken along line IX-IX of FIG. 8.

Referring to FIGS. 5 to 9, the heat insulator 10 according to the present disclosure can be applied to the main body 2 and/or the door 3 of the refrigerator 1. For example, the heat insulator 10 may include the Vacuum space 15 between the first plate 11 forming the inner wall surface of the refrigerator 1 and the second plate 12 forming the outer wall surface.

The Vacuum space 15 may be formed by directly connecting the first plate 11 and the second plate 12, or may be formed by another plate (not illustrated) coupled along the edges of the first plate 11 and the second plate 12. The present embodiment will be described focusing on an example in which the Vacuum space 15 is formed by direct/indirect coupling between the first plate 11 and the second plate 12. However, the same may be applied to a case in which the Vacuum space 15 is formed by a separate plate (not illustrated) that surrounds the edges of the plates 11 and 12 in addition to the first plate 11 and the second plate 12.

Inside the Vacuum space 15, that is, between the first plate 11 and the second plate 12, a support plate (or support) 100 may be provided to maintain the gap between the first plate 11 and the second plate 12. The support plate 100 may be formed of a metal that is relatively light and has low thermal conductivity while having rigidity similar to aluminum. Accordingly, when vacuum pressure is formed in the Vacuum space 15, deformation of the first plate 11 and/or the second plate 12 is suppressed, and at the same time, heat conduction between the two plates 11 and 12 is lowered, thereby increasing energy efficiency.

Only one support plate 100 may be provided in the Vacuum space 15, or a plurality of support plates 100 may be stacked along the spacing direction (hereinafter, thickness direction) between the first plate 11 and the second plate 12. The present embodiment is described focusing on an example in which the plurality of support plates are stacked. However, the same principles may be applied even when there is only one support plate.

As described above, in the support plate 100, the plurality of support plates are stacked along the thickness direction, and the following description will be given as an example of a case in which there are two support plates. In this case, the support plate facing the second plate 12 is defined as a first support plate 110, and the support plate facing the first plate 11 is defined as a second support plate 120.

Referring to FIGS. 5 and 6, the first support plate 110 and the second support plate 120 may be formed symmetrically to each other. In other words, the first support plate 110 and the second support plate 120 may be formed identically to each other and may be stacked along the thickness direction described above. However, the first support plate 110 and the second support plate 120 may also be formed asymmetrically as long as the first and second support plates are stacked to each other. Hereinafter, an example in which the first support plate 110 and the second support plate 120 are formed symmetrically will be described.

The first support plate 110 may include a first connection portion 111 and/or a first support portion 112. The first connection portion 111 is a portion that connects the first support portions 112 to each other, and the first support portion 112 is a portion that extends from the first connection portion 111 and supports the first plate 11 and the second plate 12 in the thickness direction described above.

The first connection portion 111 may be formed in a plate shape or a frame shape. When the first connection portion 111 is formed in a plate shape, the entire first connection portion 111 may be formed in a closed plate shape, but it may also be formed in an open plate shape with a number of holes at appropriate locations. The present embodiment will be described focusing on an example in which the first connection portions 111 are formed in a frame shape.

The first connection portion 111 may be formed at the same height, that is, the first connection portion 111 may be formed on the same plane. Accordingly, processing of the first connection portion 111 can be facilitated. In addition, when the first thermal resistance sheet 131 is injected, which will be described later, the flatness of the first thermal resistance sheet 131 is secured, so that the gap between the facing plates 110 and 120 can be maintained uniformly.

Referring to FIGS. 5 to 8, the first connection portions 111 may be formed in a frame shape, for example, a lattice shape. In other words, the first connection portion 111 may be formed of a plurality of lattice points 115 and a plurality of lattice ribs 116 connecting the adjacent lattice points 115. The cross-sectional area of the lattice point 111a and/or the cross-sectional area of the lattice rib 111b may be formed to be smaller than the cross-sectional area of a lattice space 111c defined as the empty space between the lattice ribs 12b. Accordingly, the cross-sectional area of the first connection portion 111 may be formed as small as possible to suppress heat conduction due to the first connection portion 111.

For example, the first connection portion 111 may be formed in a checkerboard or nearly checkerboard shape. In other words, the first connection portion 111 may be formed such that the lattice ribs 111b intersect at right angles at the lattice points 111a. Accordingly, the cross-sectional area of the first connection portion 111 can be minimized while ensuring the support strength as uniformly as possible.

In the first connection portion 111, an annular lattice rib 111b that connects outermost lattice points 111a1 to each other and serves as an annular side surface support in a vacuum may be formed in a square ring shape, and a linear lattice rib 111b2 that further extends in the transverse direction (or X, Y direction) from the outer surface of the annular lattice rib 111b1 and serves as a side surface support in a vacuum may be formed. The present embodiment illustrates an example of the first connection portion 111 in which a linear lattice rib 111b2 further extends in the transverse direction (or X, Y direction) from the annular lattice rib 111b1 as illustrated in FIG. 6. In this case, the outermost end surface of the linear lattice rib 111b2 may be formed with a chamfered corner. Accordingly, deformation of the first plate 11, the second plate 12 and/or other plates of the heat insulator 10 can be suppressed when the heat insulator is in a vacuum.

Referring to FIGS. 7 and 8, the first connection portion 111 may be formed to have curved edges. In other words, the first connection portion 111 may be formed to have an approximately rectangular shape, but each corner (for example, an outer corner) that contacts the first plate 11 and/or the second plate 12, or another plate (not illustrated) surrounding the corner, may be formed to have a rounded shape with a preset curvature. Accordingly, the first plate 11 and/or the second plate 12, or another plate surrounding the corner, may be prevented from being deformed or damaged by the corners of the first connection portion 111 when vacuum is applied.

The first connection portion 111 may also be formed to have a rounded corner (for example, an inner corner) facing the first connection portion 111 of another adjacent first support plate 110. Accordingly, damage caused by collision between adjacent first support plates 110 and 110 under vacuum can be suppressed.

In this case, the curvature of an inner corner 111e may be formed to be the same as the curvature of an outer corner 111d. In other words, the outer corner 111d and the inner corner 111e may be formed to be rounded so as to be symmetrical to each other. Accordingly, compatibility with the first support plate 110 is secured, so that when the plurality of first support plates 110 are disposed on a plane, the plurality of first support plates 110 can be easily disposed.

Referring to FIG. 6, the first connection portion 111 may be formed in a square cross-section shape. In other words, the first connection portion 111 may be formed in a square cross-section shape so that each of the surfaces facing the first plate 11 and/or the second plate 12 is flat. Accordingly, the first thermal resistance sheet 131 described later may be stably supported by the surface facing toward or away from the first plate 11 and/or the second plate 12.

Although not illustrated in the drawings, the first connection portion 111 may also be formed with a semi-circular cross-section. For example, one surface of the first connection portion 111, for example, the surface facing away from the first plate 11, may be formed as a plane to secure a surface area on which the first thermal resistance sheet 131 described above can be placed, and the other surface may be formed as a circle. Accordingly, the first thermal resistance sheet 131 can be stably supported while the cross-sectional area of the first connection portion 111 can be reduced, thereby reducing the heat conduction through the first connection portion 111.

Referring to FIG. 7, the first connection portion 111 may further include a reinforcement rib 111f. For example, the first connection portion 111 may be formed by connecting between lattice points 111a or between lattice ribs 111b. In the present embodiment, an example is illustrated in which the reinforcement ribs 111f are formed to connect between lattice ribs 111b. In other words, the lattice ribs 111b around the reinforcement ribs 111f connect between adjacent lattice points 11la, and among these lattice ribs 111b, some of the lattice ribs 111b may be connected in a "+" shape between other lattice ribs 111b that face each other in the transverse direction (or X, Y direction). Accordingly, the overall rigidity of the lattice ribs 111b and the first connection portion 111 including the lattice ribs can be improved.

Referring to FIG. 7, the first connection portion 111 may further include a vacuum measurement support ring 111g. For example, the vacuum measurement support ring 111g may be formed in an annular shape and may be connected to each of the first support groove portions 1122 described below. Accordingly, support rigidity for the vacuum measurement support ring 111g may be secured.

Referring to FIGS. 5 to 9, a first thermal resistance sheet 131 may be provided on one surface of the first connection portion 111, that is, on the surface facing away from the first plate 11. The first thermal resistance sheet 131 is a member that blocks radiant heat generated in the Vacuum space 15 and may be attached to one surface of the first connection portion 111. For example, the first thermal resistance sheet 131 may be formed by insert injection into the first connection portion 111. However, in some cases, the first thermal resistance sheet 131 may be post-assembled using a separate adhesive on one surface of the first connection portion 111. The present embodiment illustrates an example in which a plurality of first injection holes 131a into which first support portions 112 are inserted are provided in the first thermal resistance sheet 131 and the first thermal resistance sheet is formed by being insert-injected into the first connection portion 111. Accordingly, the first thermal resistance sheet 131 can be easily assembled, thereby reducing manufacturing costs. The same applies to the second thermal resistance sheet 132. In other words, the second thermal resistance sheet 132 also includes a plurality of second injection holes 132a into which the second support portion 122 is inserted, so that the second thermal resistance sheet can be insert-molded into the second connection portion 121.

Referring to FIGS. 6 and 9, the first support portion 112 may extend in the thickness direction from the first connection portion 111. For example, the first support portion 112 may extend in both thickness directions from the lattice point 111a of the first connection portion 111, and the total height (or length) of the first support portion 112 may be formed to be smaller than the gap between the first plate 11 and the second plate 12. Hereinafter, the first support portion 112 extending in the direction toward the first plate 11 is defined as the first support protrusion 1121, and the first support portion 112 extending in the opposite direction is defined as a first support groove portion 1122.

The first support protrusion 1121 extends from one surface of the first connection portion 111 toward the first plate 11, and may be formed in a solid bar cross-section shape. For example, the first support portion 112 may be formed in a circular bar cross-section shape, or may be formed in an angular cross-section shape such as a square bar. When the first support protrusion 1121 is in a circular bar shape, processing and assembly are easy, and when the first support protrusion is in an angular cross-section shape, rotation in the circumferential direction with respect to the second support plate 120 described later can be suppressed, thereby increasing assembly reliability. The present embodiment will be described with reference to an example in which the first support protrusion 1121 is formed in a circular bar cross-section shape.

The first support protrusion 1121 may be formed with the same outer diameter along the longitudinal direction. However, the first support protrusion 1121 may also be formed with different outer diameters along the longitudinal direction. For example, the first support protrusion 1121 may be formed so that the outer diameter becomes smaller in the longitudinal direction (or -Z direction) away from the first connection portion 111, that is, in the direction closer to the first plate 11. In this case, the first support protrusion 1121 may be formed in a truncated cone shape or a tapered cross-sectional shape. Accordingly, the first support protrusion 1121 can be easily manufactured while reducing the contact area with the first plate 11, thereby reducing thermal conduction.

The first support protrusion 1121 may be formed so that the corner of an end surface 1121a thereof is rounded or inclined. Accordingly, the contact area of the first support protrusion 1121 in contact with the first plate 11 is reduced, while stress at the corner of the first support protrusion 1121 is dispersed, thereby suppressing deformation of the first plate 11.

Although not illustrated in the drawings, the first support protrusion 1121 may be formed in multiple steps. In this case, the contact area of the first support protrusion 1121 in contact with the first plate 11 can be further reduced, thereby further lowering the thermal conductivity.

Although not illustrated in the drawings, the first support protrusion 1121 may be formed in a hollow cylinder shape, or an insulating groove (not illustrated) may be formed in the longitudinal direction at a predetermined depth on the end surface 1121a of the first support protrusion 1121. In this case, the contact area of the first support protrusion 1121 in contact with the first plate 11 can be further reduced, thereby further lowering the thermal conductivity.

Referring to FIGS. 5 to 9, a support groove 12a into which the end of the first support protrusion 1121 is inserted may be formed in the first plate 11 facing the end of the first support protrusion 1121. For example, the support groove 12a may be formed to protrude by a preset height from the outer surface of the second plate 12 toward the inner surface, that is, toward the first support plate 110. Accordingly, when manufacturing the heat insulator 10, by inserting the first support protrusion 1121 of the first support plate 110 into the support groove 12a, the initial position of the first support plate 110 may be determined, and at the same time, the first support plate 110 may be suppressed from being pushed in the transverse direction (or X, Y direction) when a vacuum is applied.

The support groove 12a may be formed in an annular shape. In other words, the support groove 12a may be formed in an annular shape to accommodate the first support protrusions 1121 individually and surround the first support protrusions 1121 in a circumferential direction. Accordingly, the support groove 12a may restrain the first support protrusions 1121 in the entire transverse direction (or X, Y directions).

Although not illustrated in the drawings, the support groove 12a may be formed in an arc shape. In this case, the support groove 12a may be formed in a plurality of shapes that are blocked in different directions. Accordingly, while the support groove 12a is formed in an arc shape, it is possible to determine the initial position of the first support plate 110 and suppress the first support plate 110 from being pushed in the transverse direction (or X, Y direction) when vacuum is applied.

Referring to FIGS. 5 to 9, a support step 12b that supports the end of the first support protrusion 1121 may be formed on the first plate 11 facing the end surface 1121a of the first support protrusion 1121. For example, the support step 12b may be formed to protrude from the outer surface of the first plate 11 toward the inner surface, that is, toward the first support plate 110, by a preset height. Accordingly, the first support plate 110 can be prevented from being pushed in the transverse direction (or X, Y direction) when vacuum is applied.

The support step 12b may be extended in the transverse direction of the first support plate 110, for example, in the X direction and/or the Y direction. In other words, the support step 12b may be formed in a long linear shape along the longitudinal direction of the first support plate 110 so as to support a plurality of first support protrusions 1121. Accordingly, the force of the first support protrusions 1121, which form a portion of the first support plate 110 when vacuum is applied, being pushed outward, can be widely distributed, thereby firmly supporting the first support plate 110.

In the present embodiment, the support step 12b is formed within the range of the first support plate 110, but in some cases, the support step 12b may be formed across between the adjacent first support plates 110. In this case, the arrangement between the first support plates 110 can be more effectively maintained by uniformly supporting the adjacent first support plates 110. This will be described later in another embodiment.

Referring to FIGS. 6 and 9, the first support groove portion 1122 protrudes from the other surface of the first connection portion 111 toward the second support plate 120, that is, in the thickness direction (or Z direction) described above, by a preset height, and a first connecting groove 1126, which will be described later, may be formed on an end surface 1122a of the first support groove portion 1122. A second support protrusion 1221 of the second support plate 120, which will be described below, may be inserted into and coupled to the first connecting groove 1126. Accordingly, the first support plate 110 and the second support plate 120 may be spaced apart by a predetermined distance in the thickness direction described above.

The first support groove portion 1122 may be formed with the same cross-sectional area and/or outer diameter along the longitudinal direction like the first support protrusion 1121, or may be formed so that the cross-sectional area and/or outer diameter become smaller as the first support groove portion gets farther away from the first connection portion 111. Of course, the outer peripheral surface of the first support groove portion 1122 may also be formed with an angular cross-sectional shape. In the present embodiment, an example in which the first support groove portion 1122 is formed with a truncated cone cross-sectional shape in which the cross-sectional area and/or outer diameter become smaller as the support groove portion gets farther away from the first connection portion 111 will be described.

For example, as illustrated in FIG. 9, the first support groove portion 1122 may be formed so that an outer diameter D41 of a first end (or root side) in contact with the first connection portion 111 is larger than an outer diameter D42 of a second end (or end side) on the opposite side. Accordingly, while a first coupling groove 1125 for coupling the first thermal resistance sheet 131 to the first end of the first support groove portion 1122 is formed, the rigidity of the first support groove portion 1122 can be secured. In this case, it may be advantageous in terms of the rigidity of the first support groove portion 1122 for an inner diameter D1 of the first coupling groove 1125 to be formed to be larger than or equal to an inner diameter D2 of the first connecting groove 1126 to be described later.

The first connecting groove 1126 described above may be formed at the second end of the first support groove portion 1122. The first connecting groove 1126 may be formed to be recessed by a preset depth in the depth direction (or -Z direction) from the second end of the first support groove portion 1122 toward the first end. The first connecting groove 1126 may be formed with the same inner diameter D2, or may be formed with a tapered cross-section shape or stepped shape in which the inner diameter D2 becomes smaller as it goes toward the first end. The present embodiment will be described with reference to an example in which the inner diameter D2 of the first connecting groove 1126 is the same along the depth direction. In this case, the inner diameter D2 of the first connecting groove 1126 may be formed to be smaller than or equal to an outer diameter D31 of the root side of the first support protrusion 1121 and larger than or equal to an outer diameter D32 of the end side of the first support protrusion 1121. Accordingly, the first support protrusion 1121 may be tightly inserted into the first connecting groove 1126 and firmly coupled. This can suppress vibration between members and reduce abnormal noise.

Referring to FIGS. 5 to 9, the second support plate 120 according to the present embodiment may be formed identically or nearly identically to the first support plate 110. In other words, the second support plate 120 also includes the second connection portion 121 and the second support portion 122, and the second support portion 122 may include a second support protrusion 1221 and a second support groove portion 1222. Since the second connection portion 121 and the second support portion 122 of the second support plate 120 are nearly identical to the first connection portion 111 and the first support portion 112 of the first support plate 110, the description thereof will be replaced with the description of the first support plate 110 described above.

In this case, the second support protrusion 1221 may be formed with the same outer diameter along the longitudinal direction as described above, or may be formed with different outer diameters along the longitudinal direction. For example, when the second support protrusion 1221 is formed with a truncated cone shape or a tapered cross-sectional shape, the second support protrusion 1221 can be easily manufactured while reducing the contact area with the first support groove portion 1122, for example, the first connecting groove 1126, thereby lowering the thermal conductivity between the support plates 110 and 120. When the second support protrusion 1221 is formed in multiple steps, the contact area with the first support groove portion 1122 is expanded, thereby increasing the assembly strength between the support plates 110 and 120.

The second support plate 120 according to the present embodiment may be provided with the second thermal resistance sheet 132 on one surface of the second connection portion 121, for example, on the surface facing the second plate 12. In this case, the second thermal resistance sheet 132 may be formed by insert injection so as to be exposed on one surface of the second support plate 120, that is, one surface of the second connection portion 121. This may be formed in the same manner as the first thermal resistance sheet 131 described above, for example, a second coupling groove 1225 may be formed on the outer peripheral surface of the second support groove portion 1222 so that the second thermal resistance sheet 132 is inserted and coupled. This will also be replaced with the description of the first coupling groove 1125 described above.

A second connecting groove 1226 may be formed on the end surface 1222a forming the second end of the second support groove portion 1222. The second connecting groove 1226 may be formed in the same shape as the first connecting groove 1216. Accordingly, the contact area of the second support groove portion 1222 in contact with the second plate 12 is reduced, thereby lowering the thermal conductivity between the second plate 12 and the second support plate 120.

Although not illustrated in the drawings, when a third support plate (not illustrated) is stacked on one side of the second support plate 120, the third support protrusion (not illustrated) of the third support plate may be inserted into and coupled to the second connecting groove 1226 of the second support groove portion 1222. Accordingly, the multi-stage support plates may be stably coupled.

The heat insulator according to the present embodiment as described above has the following effects.

That is, in the present embodiment, the first support plate 110 and the second support plate 120 may be spaced apart by a predetermined distance in the thickness direction. In other words, at least two or more support plates 110 and 120 are provided with support protrusions 1121 and 1221 and support groove portions 1122 and 1222 on each of both sides, and the support protrusions 1121 and 1221 and support groove portions 1122 and 1222 may be assembled and coupled to each other. Accordingly, even when the wall thickness of the main body 2 and/or door 3 of the refrigerator 1 defined by the interval between the first plate 11 and the second plate 12 is varied, the number of stacked support plates 110 and 120 can be adjusted accordingly. Through this configuration, the design change of the support plate due to the change in wall thickness can be minimized, thereby reducing the manufacturing cost of the heat insulator 10 and the refrigerator 1 having the heat insulator.

In the present embodiment, the first support plate 110 includes a first thermal resistance sheet 131, and the second support plate 120 includes a second thermal resistance sheet 132, and the first and second support plates may be stacked at a predetermined interval in the thickness direction. Accordingly, a plurality of thermal resistance sheets 131 and 132 are provided in the thickness direction within the Vacuum space 15 of the same specification, so that radiant heat between the first plate 11 and the second plate 12 can be reduced. This also applies when the support plate having the thermal resistance sheet is added. For example, when a third support plate (not illustrated) having a third thermal resistance sheet (not illustrated) is stacked at a predetermined interval on one surface of the second support plate 120, the radiant heat can be further reduced.

Meanwhile, there is another embodiment of the heat insulator as follows.

That is, in the embodiments described above, the plurality of support plates are individually supported, but in some cases, the plurality of support plates may be supported collectively.

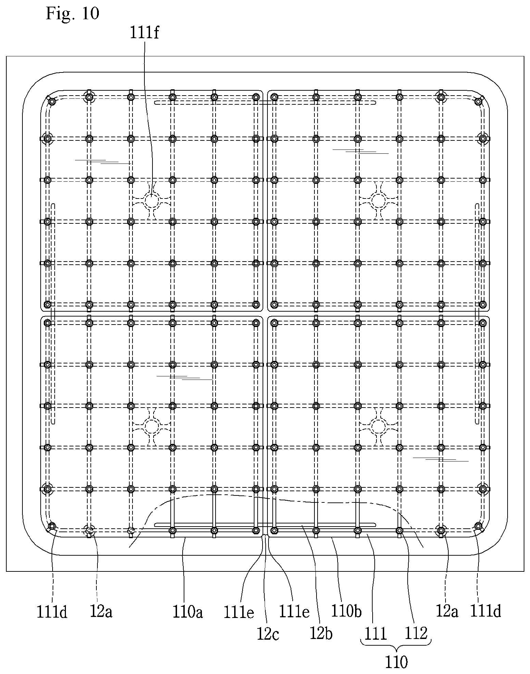

FIG. 10 is a plan view illustrating another embodiment of the heat insulator according to the present disclosure.

Referring to FIG. 10, the basic configuration and the resulting operational effects of the heat insulator 10 according to the present embodiment are the same or almost the same as those of the heat insulator 10 of the aforementioned embodiment. For example, the heat insulator 10 according to the present embodiment includes a first plate 11, a second plate 12, and a Vacuum space 15, and a plurality of support plates 110 and 120 are stacked on the Vacuum space 15 to support the first plate 11 and the second plate 12. The connection portions 111 and 121 and support protrusions 1121 and 1221 and support groove portions 1122 and 1222 extending from both side surfaces of the connection portions 111 and 121 are formed in each of the plurality of support plates 110 and 120, and the support protrusions 1121 and 1221 and the support groove portions 1122 and 1222 of the adjacent support plates 110 and 120 may be assembled by interlocking. Accordingly, by assembling the support plates 110 and 120 by increasing or decreasing the number of the support plates according to the gap between the first plate 11 and the second plate 12, the manufacturing cost of the heat insulator 10 and the refrigerator having the heat insulator can be reduced.

The plurality of support plates 110 and 120 may be each attached to the thermal resistance sheets 131 and 132 by insert injection. Accordingly, the thermal resistance sheets 131 and 132 can be easily attached to the support plates 110 and 120, and at the same time, the plurality of thermal resistance sheets 131 and 132 are provided in multiple stages to reduce the heat transfer rate due to radiant heat in the Vacuum space 15.

However, in the present embodiment, as in the embodiment described above, the support step 12b may be formed on the first plate 11 and/or the second plate 12 so as to protrude toward the support plates 110 and 120, and the support step 12b may be formed to cross between the two adjacent support plates 110a and 110b on the same plane.

In other words, the support groove 12a and/or the support step 12b into which the support protrusions 1121 and 1221 and/or the support groove portions 1122 and 1222 of the support plate 110 facing the first plate 11 and/or the second plate 12 are inserted or hooked to be supported may be formed in the first plate 11 and/or the second plate 12. Accordingly, not only can the initial position of the support plates 110 and 120 be determined at an accurate position, but also the support plates 110 and 120 can be prevented from being pushed when vacuum is applied.

The support groove 12a may be formed in an annular shape or an arc shape so that the support protrusions 1121 and 1221 and/or the support groove portions 1122 and 1222 are inserted individually, as in the above-described embodiment. In other words, the support groove 12a may be formed at appropriate locations so that some of the support protrusions 1121 and 1221 and/or the support groove portions 1122 and 1222 are inserted individually.

The support step 12b may be formed linearly and long so as to collectively support the plurality of support protrusions 1121 and 1221 and/or support groove portions 1122 and 1222. For example, the support step 12b is formed near the corner of the first plate 11, and the support step 12b may be formed long along the transverse direction (for example, X, Y direction) so as to collectively support the plurality of first support protrusions 1121 disposed on the same line in the transverse direction (or X, Y direction).

The support step 12b according to the present embodiment may be formed so as to extend across a spaced region 12c between the portions of the two adjacent first support plates 110 that face each other on the plane. Accordingly, the plurality of first support plates 110a and 110b may be supported in the transverse direction by the same support step 12b, thereby maintaining the alignment of the first support plates 110 consistently.

In this case, the inner corner 111e of the first connection portion 111 forming the body of the first support plate 110 may be formed in a right-angled shape. In other words, among the outermost lattice points 111a1, a lattice point located at a corner may not be disposed on the same line as other outermost lattice points 111a1 when the corner is rounded.

However, when the inner corner 111e of the first connection portion 111 is formed at a right angle as described above, the outermost lattice point 111a1 located at the inner corner 111e may be disposed on the same line as other outermost lattice points 111a1. Accordingly, even when the support step 12b is formed across the spaced region 12c between both support plates 110a and 110b, the outermost lattice points 111a1 and 111a1 facing each other can be uniformly supported. Through this configuration, the plurality of support plates 110 and 120 disposed on the same plane can be stably supported, thereby increasing the reliability of the heat insulator 10.

Meanwhile, there is another example of the heat insulator as follows.

That is, in the above-described embodiments, the first thermal resistance sheet is formed only on one surface of the first connection portion, but in some cases, the first thermal resistance sheets may be formed on one surface and the other surface of the first connection portion, respectively.

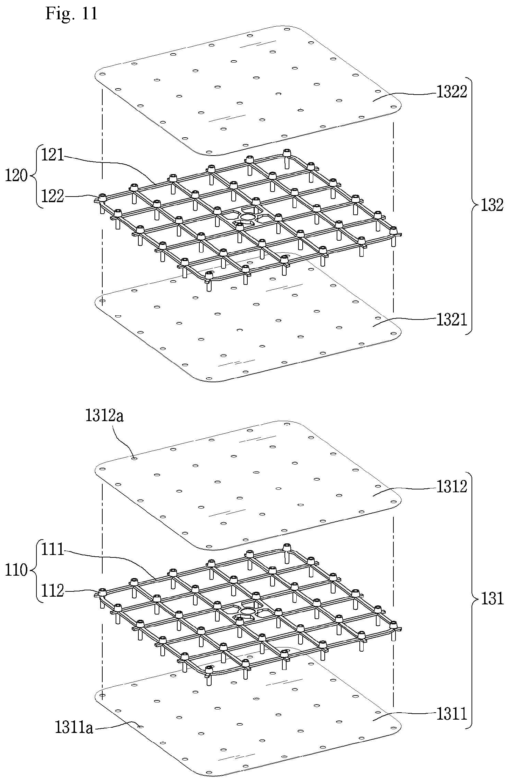

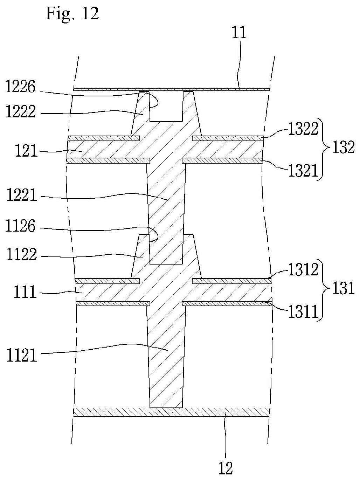

FIG. 11 is an exploded perspective view illustrating still another embodiment of the heat insulator according to the present disclosure, and FIG. 12 is an assembled cross-sectional view of FIG. 11.

Referring to FIGS. 11 and 12, the basic configuration and the resulting operational effect of the heat insulator 10 according to the present embodiment are the same or almost the same as those of the heat insulators 10 of the above-described embodiments. For example, the heat insulator 10 according to the present embodiment includes a first plate 11, a second plate 12, and a Vacuum space 15, and a plurality of support plates 110 and 120 are stacked on the Vacuum space 15 to support between the first plate 11 and the second plate 12. The connection portions 111 and 121 and support protrusions 1121 and 1221 and support groove portions 1122 and 1222 extending from both side surfaces of the connection portions 111 and 121 are formed in each of the plurality of support plates 110 and 120, and the support protrusions 1121 and 1221 and the support groove portions 1122 and 1222 of the adjacent support plates 110 and 120 may be assembled by interlocking. Accordingly, by assembling the support plates 110 and 120 by increasing or decreasing the number of the support plates according to the gap between the first plate 11 and the second plate 12, the manufacturing cost of the heat insulator 10 and the refrigerator having the heat insulator can be reduced.

The plurality of support plates 110 and 120 may be each attached to the thermal resistance sheets 131 and 132 by insert injection. Accordingly, the thermal resistance sheets 131 and 132 can be easily attached to the support plates 110 and 120, and at the same time, the plurality of thermal resistance sheets 131 and 132 are provided in multiple stages to reduce the heat transfer rate due to radiant heat in the Vacuum space 15.

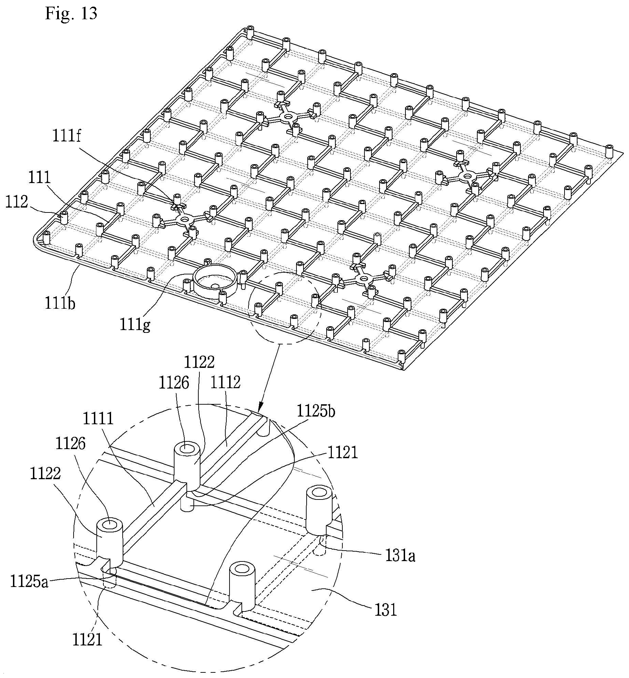

However, in the present embodiment, as in FIG. 12 and 13, the thermal resistance sheets 131 and 132 may be respectively formed on both side surfaces of the support plates 110 and 120, that is, on the surfaces facing the first plate 11 as well as the second plate 12. For example, a first thermal resistance sheet 1311 on one side may be provided on one surface of the first connection portion 111 of the first support plate 110 facing away from the first plate 11, and a first thermal resistance sheet 1312 on the other side may be provided on the other surface of the first connection portion 111 of the first support plate 110 facing the first plate 11.

The first-column resistance sheet 1311 on the one side and the first-column resistance sheet 1312 on the other side are respectively provided with a first injection hole 1311a on one side and a second injection hole 1312a on the other side, and may be formed by insert injection on one surface and the other surface of the first connection portion 111, respectively. In this case, a first coupling groove 1125a one side may be formed in a ring shape on the outer surface of the first support groove portion 1122 that meets one surface of the first connection portion 111, and a first coupling groove 1125b on the other side may be formed in a ring shape on the outer peripheral surface of the first support protrusion 1121 that meets the other surface of the first connection portion 111. Accordingly, the first thermal resistance sheet 1311 on the one side and the first thermal resistance sheet 1312 on the other side may be firmly coupled to both surfaces of the first connection portion 111, respectively.

This may be equally applied to the second support plate 120, and may also be equally applied when other support plates (not illustrated) are provided in addition to the first support plate 110 and the second support plate 120.

As described above, since the thermal resistance sheets 1311 and 1312, and 1321, and 1322 are respectively provided on both side surface of each of the connection portions 111 and 121, a much larger number of thermal resistance sheets 1311, 1312, 1321, and 1322 can be provided inside the same Vacuum space 15, that is, between the first plate 11 and the second plate 12. Through this configuration, the heat transfer rate between the first plate 11 and the second plate 12 can be more effectively reduced.

Meanwhile, there is still another embodiment of the heat insulator as follows.

That is, in the embodiments described above, the connection portions are formed on the same plane, but in some cases, the connection portions may be formed on different planes.

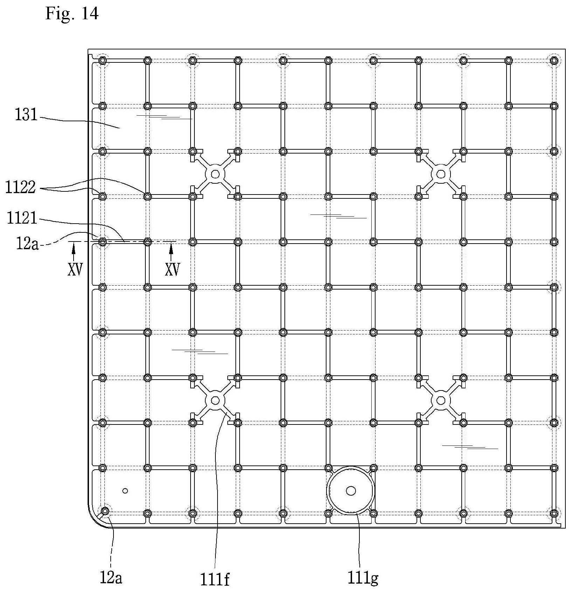

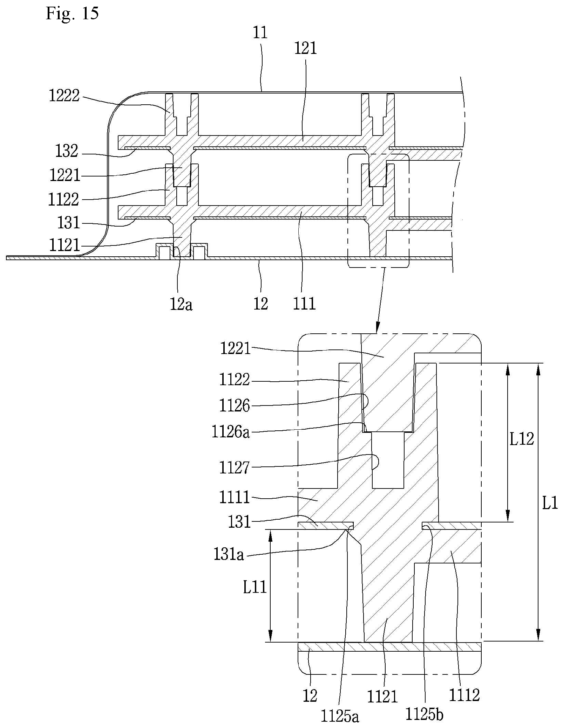

FIG. 13 is a perspective view illustrating still another embodiment of the heat insulator according to the present disclosure, FIG. 14 is a plan view of FIG. 13, and FIG. 15 is a cross-sectional view taken along line X-X of FIG. 14.

Referring to FIGS. 13 to 15, the basic configuration and the resulting operational effects of the heat insulator 10 according to the present embodiment are the same or almost the same as those of the heat insulators 10 of the aforementioned embodiments. For example, the heat insulator 10 according to the present embodiment includes a first plate 11, a second plate 12, and a Vacuum space 15, and a plurality of support plates 110 and 120 are stacked on the Vacuum space 15 to support the first plate 11 and the second plate 12. The connection portions 111 and 121 and support protrusions 1121 and 1221 and support groove portions 1122 and 1222 extending from both side surfaces of the connection portions 111 and 121 are formed in each of the plurality of support plates 110 and 120, and the support protrusions 1121 and 1221 and the support groove portions 1122 and 1222 of the adjacent support plates 110 and 120 may be assembled by interlocking. Accordingly, by assembling the support plates 110 and 120 by increasing or decreasing the number of the support plates according to the gap between the first plate 11 and the second plate 12, the manufacturing cost of the heat insulator 10 and the refrigerator having the heat insulator can be reduced.

The plurality of support plates 110 and 120 may be each attached to the thermal resistance sheets 131 and 132 by insert injection. Accordingly, the thermal resistance sheets 131 and 132 can be easily attached to the support plates 110 and 120, and at the same time, the plurality of thermal resistance sheets 131 and 132 are provided in multiple stages to reduce the heat transfer rate in the Vacuum space 15.

However, in the present embodiment, the connection portions 111 and 121 may be formed to be positioned at different heights. For example, some of the first connection portions 111 of the first support plate 110 may be formed to be positioned on one surface of the first thermal resistance sheet 131, while others may be positioned on the other surface of the first thermal resistance sheet 131. The same applies to the second support plate 120. The following description will focus on the first support plate 110.

The first support plate 110 according to the present embodiment may include the first connection portion 111 and the first support portion 112, similar to the embodiments described above. The basic configurations and the resulting operational effects of the first connection portion 111 and the first support portion 112 are almost identical to those of the embodiments described above, and therefore, the description thereof will be replaced with the description of the embodiments described above.

Referring to FIGS. 13 and 15, the first connection portion 111 may include a first connection portion 1111 on one side and a first connection portion 1112 on the other side based on the first thermal resistance sheet 131. In other words, the first thermal resistance sheets 131 may be formed to be positioned on the same plane, and the first connection portion 1111 on the one side may be formed to be positioned on one surface of the first thermal resistance sheet 131, and the first thermal resistance sheet 131 on the other side may be formed to be positioned on the other surface of the first thermal resistance sheet 131.

In this case, the coupling groove for coupling the first thermal resistance sheet 131 may also be formed in each of the first support protrusion 1121 and the first support groove portion 1122. In other words, in some of the first support portions 112, the entirety of the corresponding first coupling groove 1125 may be formed on the outer peripheral surface of the first support protrusion 1121 (or the outer peripheral surface of the second support protrusion). In contrast, in other first support portions 112, a part of the corresponding first coupling groove 1125 may be formed on the outer peripheral surface of the first support protrusion 1121, and another part of the corresponding first coupling groove 1125 may be formed on the outer peripheral surface of the first support groove portion 1122, respectively. Accordingly, even when the first connection portion 1111 on one side and the first connection portion 1112 on the other side are respectively provided on both side surfaces of the first thermal resistance sheet 131 based on the first thermal resistance sheet 131, the first thermal resistance sheet 131 can be stably coupled.

As described above, the first connection portion 1111 on the one side may be formed to connect the outer peripheral surfaces of the adjacent first support protrusions 1121, and the first connection portion 1112 on the other side may be formed to connect the outer peripheral surfaces of the adjacent first support groove portions 1122. In other words, with respect to the first support portion 112, the first connection portion 111 that actually supports the first support portion 112 may be formed to support the two points spaced apart by a predetermined interval along the longitudinal direction (or Z direction) of the first support portion 112. Accordingly, the first support portion 112 may be formed relatively thinly, while stably maintaining the stacked state of the first support plate 110 and the second support plate 120. Through this configuration, the heat conduction between the support plates 110 and 120 through the support portions 112 and 122 may be suppressed.

As illustrated in FIG. 15, since the first connection portion 1111 on the one side and the first connection portion 1112 on the other side are formed at different heights, the length L11 of the first support protrusion 1121 may be formed to be almost the same as the length L12 of the first support groove portion 1122. In other words, the length L11 of the first support protrusion 1121 may be formed to be shorter than in the above-described embodiments, while the length L12 of the first support groove portion 1122 may be formed to be longer than in the above-described embodiments. Accordingly, the length L1 of the first support portion 112 may be formed to be almost the same as in the above-described embodiments.

As described above, as the length L11 of the first support protrusion 1121 becomes shorter, the longitudinal (or Z-direction) rigidity can be improved. As the length L12 of the first support groove portion 1122 becomes longer, a depth H11 of the first connecting groove 1126 may be formed deeper. In this case, a first insulating groove 1127 may be formed inside the first connecting groove 1126. In other words, a stepped first support surface 1126a is formed in an annular shape in the middle of the inner peripheral surface of the first connecting groove 1126, and the first insulating groove 1127 spaced apart from the second support protrusion 1221 of the adjacent second support plate 120 may be formed on one side of the first support surface 1126a in the depth direction (or -Z direction). A depth H12 of the first insulating groove 1127 may be formed to be the same as or almost the same as the depth H11 of the first connecting groove 1126. Accordingly, an end surface 1221a of the second support protrusion 1221 extended from the second support plate 120 may be supported by being mounted on the first supporting surface 1126a of the first connecting groove 1126, while the end surface 1221a of the second support protrusion 1221 may be spaced apart from the first support groove portion 1122 by the cross-sectional area of the first insulating groove 1127. Through this configuration, the thermal conductivity between the first support plate 110 and the second support plate 120 can be reduced.

The heat insulator described above is not limited to the configuration and method of the embodiments described above, and the embodiments may be configured by selectively combining all or part of each embodiment so that various modifications can be made.

It will be apparent to those skilled in the art that the present disclosure may be embodied in other specific forms without departing from the spirit and essential characteristics thereof. Therefore, the above detailed description should not be construed in any way as limiting but rather as illustrative. The scope of the present disclosure should be determined by a reasonable interpretation of the appended claims, and all modifications within the scope of equivalents of the present disclosure are intended to be included within the scope of the present disclosure.

**[DETAILED DESCRIPTION OF MAIN ELEMENTS]**

| | | | |
|---|---|---|---|
| 1: | refrigerator | 2: | main body |
| 3: | door | 4: | compressor |
| 5: | condenser | 6: | expander |
| 7: | evaporator | 8: | machine room |
| 9: | cavity | 10: | vacuum heat insulator |
| 11: | first plate | 12: | second plate |
| 12a: | support groove | 12b: | support step |
| 12c: | spaced region | 13: | third plate |
| 14: | side plate | 15: | Vacuum space |
| 16: | vacuum space expansion | 17: | connecting frame |
| 18: | sealing portion | 19: | support |
| 20: | bar | 21: | connecting plate |
| 22: | support plate | 23: | radiation resistance sheet |
| 24: | shield | 26: | conduction resistance sheet |
| 28: | additional heat insulator | 30: | joint |
| 31: | port | 32: | conduit |
| 33: | film | 34: | porous material |
| 100: | support plate | 110,110a,110b: | first support plate |
| 111: | first connection portion | 111a: | lattice point |
| 111a1: | outermost lattice point | 111b: | lattice rib |
| 111b1: | annular lattice rib | 111b2: | linear lattice rib |
| 111c: | lattice space | 111d: | outer corner |
| 111e: | inner corner | 111f: | reinforcement rib |
| 111g: | vacuum measurement support ring | 1111: | first connection one side |
| 1112: | first connection portion on other side | 112: | first support portion |
| 1121: | first support protrusion | 1121a: | end surface of first support protrusion |
| 1122: | first support groove portion | 1122a: | end surface of first support groove portion |
| 1125: | first coupling groove | 1125a: | first coupling groove on one side |
| 1125b: | first coupling groove on other side | 1126: | first connecting groove |
| 1126a: | first support surface | 1127: | first insulating groove |
| 120: | second support plate | 121: | second connection portion |
| 122: | second support portion | 1221: | second support protrusion |
| 1221a: | end surface of second support protrusion | 1222: | second support groove portion |
| 1226: | second connecting groove | 131: | first thermal resistance sheet |
| 131a: | first injection hole | 1311: | first thermal resistance sheet on one side |
| 1311a: | first injection hole one side | 1312: | first thermal resistance sheet on other side |
| 1312a: | first injection hole on other side | 132: | second thermal resistance sheet |
| 132a: | second injection hole | D1: | inner diameter of first connecting groove |
| D2: | inner diameter of first connecting groove | D31: | outer diameter on root side of first supportort protrusion |
| D32: | outer diameter on end side of first supprotrusion | D41: | outer |
| | | | diameter on root sideof first support groove portion |
| D42: | outer diameter on end side of first support groove portion | H11: | depth of first connecting groove |
| H12: | depth of second insulation groove | L1: | length of first support portion |
| L11: | length of first support protrusion | L12: | length of first support groove portion |

## Claims

1. A heat insulator comprising:
a first plate;
a second plate;
a Vacuum space provided between the first plate and the second plate; and
a support for maintaining the Vacuum space,
wherein the support includes a support plate.

2. The heat insulator of claim 19, wherein a first support portion extending from one connection portion of the plurality of connection portions is in contact with the first plate, a second support portion extending from another connection portion is in contact with the second plate, and
the first support portion and the second support portion are coupled to each other.

3. The heat insulator of claim 2, wherein the first support portion is formed in a groove shape having a preset depth, and the second support portion is formed in a protrusion shape having a preset length to be inserted into the first support portion.

4. The heat insulator of claim 3, wherein a connecting groove is formed inside the first support portion so that the second support portion is inserted, and an insulating groove is formed on one surface of the connecting groove so as to be spaced apart from an end surface of the first support portion, and
a cross-sectional area of the insulating groove is smaller than a cross-sectional area of the connecting groove.

5. The heat insulator of claim 19, wherein the plurality of connection portions are each formed in a lattice shape having lattice points on a plane, and
the plurality of support portions respectively extend from the lattice points of the plurality of connection portions.

6. The heat insulator of claim 5, wherein a reinforcing portion is formed in at least one connection portion of the plurality of connection portions, and
the reinforcing portion is formed by radially connecting the lattice points.

7. The heat insulator of claim 5, wherein a reinforcing portion is formed in at least one connection portion of the plurality of connection portions, and
the reinforcing portion is formed to intersect between the lattice points.

8. The heat insulator of claim 19, wherein a support groove is formed in at least one of the first plate and the second plate so that a support portion extending from at least one of the connection portions is inserted.

9. The heat insulator of claim 8, wherein the support groove is formed in an annular shape or an arc shape so that the support portions are inserted individually.

10. The heat insulator of claim 19, wherein a support step is formed in at least one of the first plate and the second plate so that a support portion extending from at least one of the connection portions is supported in a direction toward an corner of the connection portion.

11. The heat insulator of claim 10, wherein the support step is formed linearly so that a plurality of the support portions are supported.

12. The heat insulator of claim 11, wherein the plurality of support plates are disposed spaced apart from each other on the same plane, and
the support step is formed by crossing between the plurality of support plates spaced apart from each other on the same plane.

13. The heat insulator of claim 19, wherein at least one thermal resistance sheet is provided between the first plate and the second plate, and
the thermal resistance sheet is formed by insert injection into at least one of the plurality of support plates.

14. The heat insulator of claim 13, wherein a coupling groove is formed on the outer peripheral surface of the plurality of support portions so that the thermal resistance sheet is inserted and supported.

15. The heat insulator of claim 13, wherein the thermal resistance sheet is formed on the same side surface of both side surfaces of each of the plurality of connection portions.

16. The heat insulator of claim 15, wherein the plurality of support portions are formed with the same length on both side surfaces of each of the plurality of connection portions.

17. The heat insulator of claim 13, wherein the thermal resistance sheet is formed on different side surfaces of both side surfaces of each of the plurality of connection portions.

18. The heat insulator of claim 17, wherein the plurality of support portions are formed with different lengths on both side surfaces of each of the plurality of connection portions.

19. The heat insulator of claim 1, wherein the Vacuum space includes a plurality of support plates stacked at a predetermined interval between the first plate and the second plate, and
the plurality of support plates include
a plurality of connection portions disposed in parallel to each other between the first plate and the second plate, and
a plurality of support portions extending from the plurality of connection portions toward the first plate and the second plate, respectively, to support the plurality of connection portions to be spaced from each other.
